(19) Europäisches Patentamt
European Patent Office
Office européen des brevets

(11) **EP 1 801 253 B1**

(12) **EUROPEAN PATENT SPECIFICATION**

(45) Date of publication and mention
of the grant of the patent:
**05.11.2014 Bulletin 2014/45**

(51) Int Cl.:
*C22C 38/00* (2006.01)    *C22C 38/38* (2006.01)
*C21D 8/00* (2006.01)    *B24C 1/10* (2006.01)

(21) Application number: **04772233.5**

(22) Date of filing: **26.08.2004**

(86) International application number:
**PCT/JP2004/012277**

(87) International publication number:
**WO 2006/022009 (02.03.2006 Gazette 2006/09)**

(54) **HIGH STRENGTH SPRING AND METHOD FOR MANUFACTURE THEREOF**

HOCHFESTE FEDER UND ZUGEHÖRIGES HERSTELLUNGSVERFAHREN

RESSORT À FORTE RÉSISTANCE ET SON PROCÉDÉ DE FABRICATION

(84) Designated Contracting States:
**DE ES FR GB**

(43) Date of publication of application:
**27.06.2007 Bulletin 2007/26**

(73) Proprietors:
• **Daido Tokushuko Kabushiki Kaisha**
**Nagoya-shi,**
**Aichi 460-8581 (JP)**
• **NHK SPRING COMPANY LIMITED**
**Yokohama-shi,**
**Kanagawa 236-0004 (JP)**

(72) Inventors:
• **KIMURA, Kazuyoshi, c/o DAIDO TOKUSHUKO K.K.**
**Minami-ku, Nagoya-shi, Aichi 4578545 (JP)**
• **KOYAMA, Hiroshi**
**Yokohama-shi, Kanagawa 2400041 (JP)**
• **TANGE, Akira, c/o NHK Spring Co., Ltd**
**Yokohama-shi, Kanagawa 2360004 (JP)**
• **OKUYAMA, Isamu, c/o NHK Spring Co., Ltd**
**Yokohama-shi, Kanagawa 2360004 (JP)**
• **HISANO, Yosuke, c/o NHK Spring Co., Ltd**
**Yokohama-shi, Kanagawa 2360004 (JP)**
• **YONEGUCHI, Akio, c/o NHK Spring Co., Ltd**
**Yokohama-shi, Kanagawa 2360004 (JP)**

(74) Representative: **Jordan, Volker Otto Wilhelm et al**
**Weickmann & Weickmann**
**Patentanwälte**
**Postfach 860 820**
**81635 München (DE)**

(56) References cited:
JP-A- 5 214 484        JP-A- 5 214 484
JP-A- 11 241 143      JP-A- 2003 253 391
JP-A- 2003 253 391  JP-A- 2004 010 965
JP-A- 2004 010 965  US-A- 5 286 312
US-A- 5 776 267

## Description

RELATED APPLICATIONS

This specification is based on PCT Patent Application No. PCT/JP2004/012277 filed on August 26, 2004.

BACKGROUND OF THE INVENTION

1. Field of the Invention

The present invention relates to a manufacturing method of a high strength spring steel according to the preamble part of claim 1 known from JP 2003253391 A.

2. Description of the Related Art

In recent years, reduction in amount of emission of carbon dioxide gas has been considered as a problem to be solved from a viewpoint of suppressing global warming. Thus, reduction in weight of a vehicle resulting in enhancement of fuel efficiency has been regarded important in a field of automobiles, so that reduction in weight of a variety of springs such as a suspension coil spring has been sought after. In order to achieve reduction in weight of the spring while maintaining required spring characteristics, it is required to have a high strength spring having design stress, $\tau_{max}$ of 1176 MPa or higher and hardness of HRC52 or higher at Rockwell hardness C scale.
By the way, the reduction in weight of the spring can be achieved by increasing design stress of the spring. The design stress is determined by permanent setting resistance and durability, and these characteristics can be improved by the following means. Improvement in the permanent setting resistance can be realized, from a material viewpoint by use of a steel grade (SUP7) having a increased amount of Si as ferrite strengthening element, or a steel grade (SUP12V) having V additionally as grain refining element, or from a processing viewpoint by conducting setting. On the other hand, improvement in the durability can be realized by increasing carbon and alloying elements so as to increase hardness after tempering from the material viewpoint, or by shot peening so as to give compression residual stress from the processing viewpoint.
However, conventionally, even if the above-described means is used, the increase in the strength can only be achieved up to HRC52 in spring hardness and 1900MPa in tensile strength from the durability viewpoint. That is, if the strength of the spring is intensified, the fracture toughness decreases so that the notch sensitivity increases thereby resulting in dispersion in durability and decrease in reliability. Further, it is also a problem that inclusions acting as notches decrease the durability. Further, there are also other problems such that adding any special element costs high in order to prevent decrease in fracture toughness, or that adding a large amount of alloy elements increases hardness after hot rolling so that cracking or breaking of wire occurs when wire is drawn.
On the other hand, in recent years, a snow melting agent constituted mainly of chloride has been sprayed so as to prevent road surface from being frozen in winter season, and thus enhancement of corrosion fatigue strength has become an important problem to be solved. However, in conventional spring steels such as SUP7 and SAE9254, increasing the hardness leads to decrease in corrosion fatigue strength and in conventional steel, there is a limit in increasing the hardness more than a current level. In a spring used under a corrosion environment, a corrosion pit serves as a notch thereby inducing decrease in corrosion fatigue strength. Even if an anti-corrosive element is added for purposes of preventing the aforementioned phenomenon, increase in hardness is induced after rolling so that workability decreases.
If the hardness of a spring is higher than that of a shot peening (SP) material, compressive residual stress which contributes largely to the enhancement of fatigue strength is not loaded sufficiently. Additionally, there are other problems such that the SP material becomes easy to break thereby leading to higher cost, and that crashed grains stick into a spring thereby reducing its durability.
It is an object of the present invention to provide a manufacturing method of a high strength spring steel which has high fatigue strength and high corrosion fatigue strength.
Patent document 1: Japanese Patent Application Publication No.3064672

SUMMARY OF THE INVENTION

To achieve the object above, the invention provides a manufacturing method according to claim 1 of a high strength spring steel containing in percent of mass, C: 0.36-0.48%, Si: 1.80-2.80%, Mn: 0.20-1.40%, P: 0.015% or less, S: 0.010% or less, Cu: 0.10-0.50%, Ni: 0.10-2.00%, Cr: 0.05-1.20%, s-Al: 0.005-0.040%, N: 0.002-0.012%, O: 0.002% or less while the remainder is constituted of Fe and inevitable impurities, wherein following equations (1), (2), (3) are satisfied and the quantity of inclusions of $10\mu m$ or larger in diameter per field of vision of $100mm^2$ is 10 or less:

$$1.2\% \leq C(\%) + Mn(\%) + Cr(\%) \leq 2.0\% \dots \text{equation (1)}$$

$$1.4\% \leq Si(\%)/3 + Cr(\%)/2 + Mn(\%) \leq 2.4\% \dots \text{equation (2)}$$

$$0.4\% \leq Cu(\%) + Ni(\%) \dots \text{equation (3).}$$

The high strength spring steel has following three features when classified largely. First, hardness thereof after quenching and tempering is adjusted to HRC52 or higher while suppressing the hardness after rolling, by addition and adjustment of components such as Si, Mn, Cr or the like.

Secondly, the quantity of inclusions (particularly inclusion of oxides) having a diameter of $10\mu m$ or larger, which can become an origin of fracture, is reduced by deoxidizing sufficiently (more specifically deoxidizing by Al) thereby providing high fatigue strength.

Thirdly, the corrosion fatigue strength is enhanced by adding and adjusting anticorrosive elements such as Cu and Ni, and by optimizing the quantity of corrosion accelerating elements.

In the above-described manner, a high strength spring steel having an excellent durability is realized even if the hardness is as high as HRC52 or higher. Then, a high strength spring having a maximum shearing stress of 1176MPa or more is achieved by performing warm peening in a temperature range of 200-350°C on such a high strength spring steel as described later.

Hereinafter, the present invention will be explained more in detail by describing the reasons for each numerical limitation.

*C (carbon): 0.36-0.48%

C is effective for obtaining a predetermined strength by annealing. For that purpose, C of 0.36% or more needs to be added. Preferably, C is added at 0.38% or more. On the other hand, since excessive addition lowers toughness after annealing and deteriorates fatigue strength and corrosion fatigue strength and the hardness after rolling is intensified too much so as to reduce cold workability, the upper limit is set to 0.48%. Preferably, it is 0.46%.

*Si (silicon): 1.80-2.80%

Si is effective for improving corrosion fatigue strength and permanent setting resistance. For that purpose, it needs to be added at 1.8% or larger. On the other hand, because excessive addition lowers the toughness, deteriorates the fatigue characteristic and accelerates generation of decarburization thereby worsening workability, its upper limit is set to 2.80%. Preferably, it is set to 2.60%.

*Mn (manganese): 0.20-1.40%

Mn is effective as deoxidizing agent at the time of melting and contributes to improvement of hardenability. Further, it has an effect of rendering harmful effect of S invalid. In order to obtain these effects, Mn needs to be added at 0.20% or larger. On the other hand, since excessive addition not only accelerates oxidization of grain boundary at the time of quenching thereby inducing embrittlement but also intensifies hardness of wire material after rolling deteriorating workability of the wire, its upper limit is set to 1.40%. Preferably, it is set to 1.10%.

*P (phosphor): 0.015% or less

The upper limit of phosphor is set to 0.015% because phosphor is segregated in austenite grain boundary at the time of heating for austenitizing so that the grain boundary is embrittled.

*S (sulfur): 0.010% or less

The upper limit of sulfur is set to 0.010% because sulfur embrittles austenite grain boundary like phosphor and forms MnS to induce deterioration of fatigue strength of the spring.

*Cu (copper) : 0.10-0.50%

Cu is effective for intensifying resistance to corrosion, thereby enhancing corrosion fatigue strength. Further, it is effective for preventing decarburization of ferrite. In order to obtain these effects, it needs to be added at 0.10% or larger. On the other hand, because excessive addition damages hot workability, the upper limit thereof is set to 0.50%. Preferably, it is set to 0.40%.

*Ni (nickel): 0.10-2.00%

Ni is effective for intensifying resistance to corrosion thereby enhancing corrosion fatigue strength. Further, it is effective for preventing decarburization of ferrite. In order to obtain these effects, it needs to be added at 0.10% or more. On the other hand, because excessive addition induces increase in cost, the upper limit thereof is set to 2.00%. Preferably, it is set to 1.80%. Further, according to the present invention, Cu and Ni need to be added together so that the total amount thereof is 0.4% or more for the corrosion fatigue strength not to deteriorate as described later.

*Cr (chromium): 0.05-1.20%

Cr is an element which contributes to improvement of hardenability. For that purpose, it needs to be added at 0.05% or larger. On the other hand, excessive addition intensifies hardness of wire material after rolling and deteriorates workability of the wire material. Further, carbide of Cr turns into a local electrode on the surface of steel to increase a corrosion pit so that the corrosion fatigue strength decreases. Therefore, the upper limit thereof is set to 1.20%. Preferably, it is set to 1.1%.

*s-Al:0.005-0.040%

Al(aluminum) is a deoxidizing element and the s-Al needs to be added at 0.005% or more to obtain its effect. On the other hand, because excessive addition results in generation of sand mark and increases the quantity of oxide type inclusions in steel thereby damaging cleanliness of the steel so that it becomes an origin of fatigue fracture, the upper limit thereof is set to 0.040%. Preferably, it is set to 0.030%. Here, the s-Al means Al soluble in acid.

*N (nitrogen): 0.002-0.012%

N has an effect of forming carbonitride and nitride which contributes to refinement of crystal grain in steel. In order to obtain this effect, it needs to be contained at 0.002% or more. On the other hand, since excessive addition generates bulky pieces of Nb carbonitride so that preventing effect of grain coarsening can not be obtained and generates TiN type inclusions thereby inducing decrease of fatigue strength, the upper limit thereof is set to 0.012%.

*O (oxygen): 0.002% or less

Because O generates oxide type inclusions and likely becomes an origin of fatigue fracture, the upper limit thereof is set to 0.002%. In the meantime, sufficient Al deoxidizing is needed to suppress the content of O to this level.

$$*1.2\% \leq C(\%) + Mn(\%) + Cr(\%) \leq 2.0\% \ldots \text{equation (1)}$$

To secure a hardness of HRC52 or higher in Rockwell hardness, C(%) + Mn(%) + Cr(%) needs to be 1.2% or larger. Preferably, it is set to 1.3% or more. On the other hand, if C(%) + Mn(%) + Cr (%) exceeds 2.0%, the steel hardens too much after rolling so that breaking or surface flaw occurs at the time of drawing. Preferably, it is set to 1.9% or less.

$$*1.4\% \leq Si(\%)/3 + Cr(\%)/2 + Mn(\%) \leq 2.4\% \ldots \text{equation (2)}$$

[in case where B is added as described later: 1.4% ≤ Si(%)/3 + Cr(%)/2 + Mn(%) + 170B(%) ≤ 2.4% … equation (2)']

To provide hardenability capable of securing hardness of HRC52 or higher at a core portion of wire material, Si (%) /3 + Cr(%)/2 + Mn(%) also needs to be 1.4% or more. Preferably, it is set to 1.5% or more. On the other hand, if Si(%)/3 + Cr(%)/2 + Mn(%) exceeds 2.4%, the hardenability is intensified excessively so that crack occurs at the time of quenching. Preferably, it is set to 2.1% or less.

* 0.4% ≤ Cu(%) + Ni(%) … equation (3)

In the high strength spring having hardness of HRC52 or higher, Cu(%) + Ni(%) needs to be 0.4% or larger in order to secure fatigue characteristic under corrosive environment.
* The quantity of inclusions (oxide type inclusions) having a diameter of $10\mu$m or more is 10 or less per field of vision of 100mm$^2$.

If 10 or more inclusions (oxide type inclusions) having a diameter of $10\mu$m or more exist per field of vision of 100mm$^2$, the fatigue strength decreases because the inclusion in steel turns to an origin of fatigue fracture. Particularly, high strength materials having hardness of HRC52 or higher are affected strongly by the inclusions.

The high strength spring steel manufactured by the method according to the present invention further contains Ti: 0.02-0.070% and optionally one or two of Nb: 0.020-0.050% and B: 0.0005-0.0030% as well as the above-described steel components. When B is contained, the equation (2) is replaced with a following equation (2)'. 1.4% ≤ Ski(%)/3 + Cur(%)/2 + Mn(%) + 170B(%) ≤ 2.4% ... equation (2)'

*Ti (titanium): 0.020-0.070%

Ti forms carbonitride in steel and refines austenite grain, and contributes to precipitation hardening. In order to obtain this effect, it is preferable to be added at 0.020% or more. On the other hand, because excessive addition allows it to be left as a relatively large non-dissolved compound when steel is heated for quenching and can become an origin of fracture thereby reducing fatigue strength, preferably, it is set to 0.070% or less.

*Ni (niobium) : 0.020-0.050%

Nb contributes to refinement of crystal grain and precipitation hardening and has an effect of enhancing permanent setting resistance. In order to obtain this effect, it is preferable to be added at 0.020% or larger. On the other hand, because excessive addition saturates its effect and lowers hot and cold workability, it is preferable to be added at 0.050% or less.

* B (boron): 0.0005-0.0030%

B precipitates with preference at crystal grain boundary thereby preventing segregation of P and S at the crystal grain boundary and enhancing fatigue strength and delayed fracture property. In order to obtain this effect, it is preferable to be added at 0.0005% or more. On the other hand, since excessive addition forms B nitride thereby damaging toughness of steel and deteriorating fatigue characteristics, it is preferable to be added at 0.0030% or less. If B is added as described above, the aforementioned equation (2)' needs to be satisfied.

Next, the high strength spring steel manufactured by the method according to the present invention may further contain one or two of Mo: 0.01-0.50% and V: 0.05-0.30% as steel components.

* Mo (molybdenum): 0.01-0.50%

Mo is an element which contributes to improvement of hardenability. It is an element which intensifies corrosion resistance, thereby enhancing corrosion fatigue strength. In order to obtain these effects, it is preferable to be added at 0.01% or more. On the other hand, since excessive addition generates bainite in wire material after rolling and can induce deterioration of cold workability, it is preferable to be 0.50% or less. More preferably, it is set to 0.40%.

* V (vanadium): 0.05-0.30%

V contributes to refinement of crystal grain and precipitation hardening, thereby enhancing permanent setting resistance. In order to obtain this effect, it is preferable to be added at 0.05% or more. On the other hand, because excessive addition turns V carbide to a local electrode on the surface of steel thereby forming a corrosion pit so that it can become an origin of cracking fracture, it is preferable to be added at 0.30% or less. Further, excessive addition can crystallize bulky pieces of primary carbide thereby possibly deteriorating cold workability. According to the manufacturing method of high strength spring of the present invention the high strength spring steel is formed into a spring shape by hot forming or cold forming, and warm shot peening is carried out.

. It has been widely known that if a large compressive residual stress is generated on the surface of a spring by shot peening processing, the fatigue strength and corrosion fatigue strength of the spring are enhanced. The magnitude of residual stress distribution by shot peening is related to deformation characteristics of the material, and for example, for the same tensile strength, a material having a smaller yield ratio (yield stress/tensile strength) can obtain a larger compressive residual stress by shot peening. Then, in the present invention, warm shot peening (WSP) is performed on a formed spring steel. The warm shot peening is a method of carrying out the shot peening in a warm temperature range of 150°C - 350°C. As a consequence, the yield point at the time of shot peening of spring steel decreases so that a sufficient compressive residual stress is obtained and finally the fatigue strength and corrosion fatigue strength of the spring are enhanced. To intensify this effect further, the warm shot peening is carried out in a temperature range of 200-350°C.

Although in an ordinary spring steel, its C quantity is generally 0.55-0.65%, the quantity of C in the high strength spring steel of the present invention is lower as described above, and thus its yield ratio is small so that a sufficient compressive residual stress can be obtained by shot peening. Further, since the quantity of C is low so that a larger deformation can be introduced, improvement in hardness in the vicinity of the surface by dynamic strain aging is achieved, thereby securing an excellent fatigue strength enhancing effect.

If the spring has a high strength, the ordinary shot peening has such a problem that an expensive SP material with high hardness needs to be used because the shot peening (SP) material is easy to crack. These problems are solved by carrying out the warm shot peening as mentioned in the invention.

As described above, according to the present invention, a high strength spring having hardness tempered to HRC52 or higher while its maximum shearing stress is 1176MPa or higher can be obtained, provided with an excellent durability due to a sufficient compressive residual stress. Such a high strength spring can be employed preferably for a coil spring, leaf spring, torsion bar, stabilizer and the like used in an automobile suspension unit or the like.

DESCRIPTION OF THE PREFERRED EMBODIMENTS

Hereinafter, the preferred embodiment of the present invention will be described in detail. Steel ingot obtained by melting, having chemical composition shown in Table 1, was bloomed and rolled to wire rod material having 13mm in diameter and 20mm in diameter. The rod rolling was performed at a rolling end temperature of 869°C with the steel heated at 1100°C. The rolled material was cooled down with air after the rolling was finished.

Table 2 shows values of C(%) + Mn(%) + Cr(%), Si(%)/3 + Cr(%)/2 + Mn(%), Cu(%) + Ni(%). Of examples deviating from a composition range specified by the present invention in respective compositions in Table, an example which is lower than the lower limit is supplied with a downward arrow (↓) and an example which is higher than the higher limit is supplied with an upward arrow (↑).

[Table 1]

| | | C | Si | Mn | P | S | Cu | Ni | Cr | Mo | V | Ti | Nb | Al | N | B | O |
|---|---|---|---|---|---|---|---|---|---|---|---|---|---|---|---|---|---|
| | upper limit | 0.48 | 2.80 | 1.40 | 0.015 | 0.010 | 0.50 | 2.00 | 1.20 | 0.50 | 0.30 | 0.070 | 0.050 | 0.040 | 0.012 | 0.0030 | 0.0020 |
| | lower limit | 0.36 | 1.70 | 0.20 | - | - | 0.10 | 0.10 | 0.10 | 0.01 | 0.05 | 0.020 | 0.020 | 0.005 | 0.02 | 0.0005 | - |
| present invention | 1 | 0.40 | 2.20 | 0.83 | 0.007 | 0.004 | 0.29 | 0.27 | 0.16 | 0 | 0 | 0 | 0 | 0.020 | 0.007 | 0 | 0.0012 |
| present invention | 2 | 0.40 | 2.19 | 0.80 | 0.009 | 0.003 | 0.30 | 0.21 | 0.13 | 0 | 0 | 0.051 | 0 | 0.011 | 0.007 | 0 | 0.0012 |
| present invention | 3 | 0.39 | 2.21 | 0.78 | 0.010 | 0.004 | 0.31 | 0.24 | 0.10 | 0 | 0 | 0 | 0.049 | 0.021 | 0.007 | 0 | 0.0013 |
| present invention | 4 | 0.39 | 2.13 | 0.78 | 0.015 | 0.009 | 0.30 | 0.11 | 0.17 | 0 | 0 | 0 | 0 | 0.038 | 0.009 | 0.0028 | 0.0011 |
| present invention | 5 | 0.44 | 2.50 | 0.98 | 0.011 | 0.002 | 0.28 | 0.78 | 0.58 | 0 | 0 | 0.037 | 0.036 | 0.021 | 0.007 | 0.0016 | 0.0011 |
| present invention | 6 | 0.48 | 2.75 | 0.24 | 0.013 | 0.007 | 0.48 | 1.95 | 1.18 | 0 | 0.28 | 0.068 | 0 | 0.007 | 0.012 | 0 | 0.0019 |
| present invention | 7 | 0.36 | 1.72 | 1.36 | 0.010 | 0.004 | 0.11 | 0.31 | 0.20 | 0.44 | 0.06 | 0.021 | 0 | 0.018 | 0.003 | 0 | 0.0009 |
| present invention | 8 | 0.41 | 2.52 | 0.70 | 0.014 | 0.010 | 0.13 | 1.75 | 0.75 | 0.37 | 0.18 | 0.040 | 0 | 0.018 | 0.005 | 0 | 0.0011 |
| present invention | 9 | 0.39 | 1.78 | 0.20 | 0.010 | 0.003 | 0.27 | 0.59 | 0.95 | 0.02 | 0.16 | 0.055 | 0.022 | 0.011 | 0.011 | 0.0015 | 0.0008 |
| comparative example | 10 | 0.39 | 2.75 | 1.45 | 0.013 | 0.004 | 0.28 | 0.24 | 0.55 | 0 | 0 | 0.050 | 0 | 0.018 | 0.012 | 0 | 0.0017 |
| comparative example | 11 | 0.48 | 2.57 | 0.70 | 0.014 | 0.007 | 0.28 | 0.25 | ↑1.27 | 0 | 0 | 0.047 | 0 | 0.026 | 0.009 | 0 | 0.0018 |
| comparative example | 12 | 0.37 | 2.73 | 0.65 | 0.009 | 0.005 | 0.28 | 0.25 | 1.00 | ↑0.53 | 0 | 0.052 | 0 | 0.026 | 0.009 | 0 | 0.0016 |
| comparative example | 13 | 0.35 | 2.73 | 0.73 | 0.011 | 0.006 | 0.31 | 0.26 | 0.11 | 0 | 0 | 0.050 | 0 | 0.023 | 0.011 | 0 | 0.0012 |

(continued)

| | | C | Si | Mn | P | S | Cu | Ni | Cr | Mo | V | Ti | Nb | Al | N | B | O |
|---|---|---|---|---|---|---|---|---|---|---|---|---|---|---|---|---|---|
| comparative exempie | 14 | 0.48 | 2.22 | 0.65 | 0.012 | 0.005 | 0.29 | 0.23 | ↓0.05 | 0 | 0 | 0.046 | 0 | 0.017 | 0.008 | 0 | 0.0009 |
| comparative example | 15 | 0.48 | 1.70 | 0.15 | 0.012 | 0.005 | 0.28 | 0.23 | 0.55 | 0 | 0 | 0.046 | 0 | 0.017 | 0.008 | 0 | 0.0008 |
| comparative axemple | 16 | 0.47 | ↓1.66 | 0.67 | 0.011 | 0.006 | 0.15 | 0.20 | 0.19 | 0 | 0 | 0.050 | 0 | 0.015 | 0.006 | 0 | 0.0012 |
| comparative example | 17 | 0.48 | 2.70 | 0.22 | 0.011 | 0.006 | 0.20 | 0.20 | 0.52 | 0 | 0 | 0.050 | 0 | 0.015 | 0.006 | 0 | 0.0015 |
| comparative example | 18 | 0.45 | 2.75 | 0.98 | 0.011 | 0.006 | 0.27 | 0.24 | 0.55 | 0 | 0 | 0.044 | 0 | 0.017 | 0.011 | 0.0020 | 0.0018 |
| comparative example | 19 | 0.47 | 2.48 | 0.55 | 0.01 2 | 0.007 | 0.29 | 0.25 | 0.98 | 0 | 0 | 0.046 | 0 | 0.014 | 0.010 | 0.0035 | 0.0012 |
| comparative example | 20 | 0.39 | 2.20 | 0.81 | 0.010 | 0.004 | 0.32 | 0.24 | 0.17 | 0 | 0 | 0.040 | 0 | ↑0.060 | 0.006 | 0 | 0.0018 |
| comparative example | 21 | 0.40 | 2.22 | 0.80 | 0.010 | 0.006 | 0.28 | 0.27 | 0.16 | 0 | | 0.036 | 0 | 0.027 | 0.005 | 0 | 0.0025 |
| comparative example | 22 | 0.40 | 2.18 | 0.80 | ↑0.018 | 0.014 | 0.30 | 0.25 | 0.15 | 0 | 0 | ↑0.075 | 0 | ↑0.042 | 0.001 | 0 | 0.0023 |
| comparative example | 23 | 0.49 | 2.62 | 0.27 | 0.009 | 0.003. | 0.31 | 1.60 | 0.88 | 0 | 0.28 | 0.052 | 0.038 | 0.023 | 0.007 | 0 | 0.0009 |
| comparative example | 24 | 0.47 | ↑2.88 | 0.25 | 0.011 | 0.003 | 0.41 | 1.62 | 0.98 | 0 | 0.29 | 0.051 | 0.037 | 0.022 | 0.09 | 0 | 0.0013 |
| comparative example | 25 | 0.46 | 2.68 | 0.27 | 0.010 | 0.005 | 0.28 | 1.48 | 1.25 | 0 | ↑0.40 | 0.050 | 0.041 | 0.018 | 0.008 | 0 | 0.0012 |
| comparative example | 26 | 0.39 | 2.50 | 0.97 | 0.010 | 0.004 | ↓0.05 | 0.49 | 0.50 | 0 | 0.20 | 0.050 | 0.039 | 0.021 | 0.007 | 0 | 0.0010 |
| comparative example | 27 | 0.47 | 1.82 | 1.00 | 0.011 | 0.004 | 0.35 | ↓0.07 | 0.52 | 0 | 0.28 | 0.052 | 0.020 | 0.018 | 0.007 | 0 | 0.0014 |
| comparative example | 28 | 0.37 | 1.85 | 1.10 | 0.010 | 0.003 | 0.12 | 0.26 | 0.41 | 0 | 0.15 | 0.051 | 0.041 | 0.022 | 0.011 | 0 | 0.0009 |

EP 1 801 253 B1

(continued)

| | C | Si | Mn | P | S | Cu | Ni | Cr | Mo | V | Ti | Nb | Al | N | B | O |
|---|---|---|---|---|---|---|---|---|---|---|---|---|---|---|---|---|
| reference example (SUP7) | 0.60 | 1.99 | 0.81 | 0.014 | 0.005 | 0.08 | 0.09 | 0.04 | 0 | 0 | 0 | 0 | 0.022 | 0.013 | 0 | 0.0025 |
| reference example (SUP9) | 0.54 | 0.21 | 0.91 | 0.014 | 0.006 | 0.02 | 0.02 | 0.79 | 0 | 0 | 0 | 0 | 0.046 | 0.010 | 0 | 0.0018 |
| reference example (SUP12) | 0.55 | 1.46 | 0.75 | 0.011 | 0.005 | 0.09 | 0.10 | 0.70 | 0 | 0 | 0 | 0 | 0.038 | 0.0006 | 0 | 0.0022 |

Following evaluations (1)-(8) were performed. Table 2 shows a result of the evaluations.

(1) Hardness after rolling

Hardness of the rolled wire material was measured in its cut section. Rockwell C scale hardness was measured at 30 points and an average hardness plus 6 times of standard deviation σ (dispersion) was regarded as "hardness after rolling". For determination on whether the hardness after rolling was acceptable, HRC35 was set to be an upper limit.

(2) Presence or absence of breaking upon drawing

The rolled wire material of 13mm in diameter was phosphated and cold drawn to 12mm in diameter so as to obtain a drawn material. Presence or absence of breaking upon drawing processing was evaluated.

(3) Quench crack

After the drawn material was heated at 900°C or higher, it was quenched by water cooling immediately so as to obtain a quenched material. Presence or absence of crack was evaluated on the quenched material.

(4) Hardness after quenching

Hardness of a core portion in the section of the quenched material was measured. Rockwell C scale hardness was measured at 20 points and whether or not an average hardness satisfies a predetermined hardness (more than 52HRC) was evaluated.

(5) Quantity of inclusions

The quantity of oxide type inclusions of $10\mu m$ or larger in diameter in the drawn material per $100mm^2$ was evaluated.

(6) Fatigue strength

A test piece was cut out from the drawn material of 20mm in diameter and quenched from 900°C or higher and tempered to 54HRC to obtain a fatigue test piece. ONO type rotating bending fatigue test was performed using the test piece so as to evaluate the fatigue strength.

(7) Corrosion fatigue strength

By tempering the aforementioned quenched material, a tempered material having hardness of HRC52 was obtained. (a) 5%NaCl aqueous solution was sprayed to a test piece sampled from the tempered material at 35°C for two hours using a salt water spray test machine, (b) the test piece was dried at a relative humidity of 70% at 60°C for four hours, and (c) the test piece was held at a relative humidity of 95% at 35°C for two hours. After the cycles (a)-(c) were repeated nine times, reversed torsion fatigue test was performed with stress amplitude set to 700 MPa. Corrosion fatigue property was evaluated with the number of repetitions until fracture. In the meantime, whether or not the number of repetitions until fracture reached 100,000 was adopted as a criterion for determining whether or not the property was acceptable.

(8) Depth of corrosion pit

Depth of corrosion pit was measured at 40 points in a section of a corroded portion after the fatigue test so as to measure a maximum value (maximum pit depth) of a pit depth. Whether or not the maximum pitch depth was $100\mu m$ or larger was adopted as a criterion for determining whether or not the pit depth was acceptable. Table 3 shows a relation between the corrosion pit depth and the number of repetitions until fracture.

[Table 2]

| | | manufacturability | | | strength | | | | tempering | fatigue strength | | corrosion fatigue strength | | | | |
|---|---|---|---|---|---|---|---|---|---|---|---|---|---|---|---|---|
| | | ①hardness after rolling | | ②Draw fracture | securing hardenability | ④hardness after quenching | | ⑤quench crack | | ⑤quantity of inclusions | ⑥fatigue strength | ⑧corrosion pit depth | | ⑦corrosion fatigue strength | | reason why unacceptable |
| | | C+Mn+Cr | (HRC) | (judgment) | Si/3+Cr/2+Mn / Si/3+Cr/2+Mn+170B | (HRC) | (judgment) | (judgment) | | (number) | (judgment) | Cu+Ni | (μm) | (frequency) | (judgment) | |
| upper limit | | 2.0 or less | 35 or less | | 2.40 | | | 2.10 | | | | | 100 | | | |
| lower limit | | 1.2 or more | | | 1.40 | 52 | | | 52 or more | | | 0.40 | | 100,000 | | |
| present invention | 1 | 1.39 | 28 | none | 1.64 | 56 | secured | none | 52 | 7 | 922 | 0.56 | 87 | 199,800 | OK | |
| present invention | 2 | 1.33 | 27 | none | 1.60 | 56 | secured | none | 52 | 7 | 916 | 0.51 | 92 | 169,500 | OK | |
| present invention | 3 | 1.27 | 26 | none | 1.57 | 56 | secured | none | 52 | 8 | 910 | 0.55 | 86 | 262,500 | OK | |
| present invention | 4 | 1.34 | 27 | none | 2.05 | 56 | secured | none | 52 | 6 | 960 | 0.41 | 95 | 226,400 | OK | |
| present invention | 5 | 2.00 | 35 | none | 2.38 | 58 | secured | none | 52 | 6 | 928 | 1.06 | 77 | 301,400 | OK | |
| present invention | 6 | 1.90 | 33 | none | 1.75 | 60 | secured | none | 52 | 9 | 920 | 2.43 | 54 | 521,000 | OK | |
| present invention | 7 | 1.92 | 35 | none | 2.03 | 56 | secured | none | 52 | 3 | 958 | 0.42 | 66 | 401,400 | OK | |
| present invention | 8 | 1.86 | 35 | none | 1.92 | 57 | secured | none | 52 | 6 | 931 | 1.88 | 16 | 893,200 | OK | |
| present invention | 9 | 1.54 | 29 | none | 1.52 | 56 | secured | none | 52 | 2 | 990 | 0.86 | 82 | 209,600 | OK | |
| comparative example | 10 | 2.39 | 39 | presence | - | - | - | - | - | | | - | - | - | - | fracture at the time of drawing |
| comparative example | 11 | 2.45 | 39 | presence | - | - | - | - | - | | | - | - | - | - | fracture at the time of drawing |
| comparative example | 12 | 2.02 | 43 | presence | - | - | - | - | - | | | - | - | - | - | fracture at the time of drawing |
| comparative example | 13 | 1.19 | 25 | none | 1.42 | 44 | short | - | - | | | - | - | - | - | insufficient strength |
| comparative example | 14 | 1.18 | 25 | none | 1.42 | 50 | short | - | - | | | - | - | - | - | insufficient strength |
| comparative example | 15 | 1.18 | 25 | none | 0.99 | 46 | short | - | - | | | - | - | - | - | insufficient strength and hardenability |
| comparative example | 16 | 1.33 | 27 | none | 1.32 | 51 | short | - | - | | | - | - | - | - | insufficient hardenability |
| comparative example | 17 | 1.22 | 26 | none | 1.38 | 49 | short | - | - | | | - | - | - | - | insufficient hardenability |
| comparative example | 18 | 1.98 | 34 | none | 2.51 | 60 | secured | presence | - | | | - | - | - | - | quench crack |
| comparative example | 19 | 2.00 | 35 | none | 2.48 | 60 | secured | presence | - | | | - | - | - | - | quench crack |
| comparative example | 20 | 1.37 | 27 | none | 1.63 | 55 | secured | none | 52 | 15 | 840 | 0.56 | 87 | 39,800 | unsatisfactory property | insufficient fatigue strength |
| comparative example | 21 | 1.36 | 27 | none | 1.62 | 55 | secured | none | 52 | 23 | 764 | 0.55 | 90 | 50,200 | unsatisfactory property | insufficient fatigue strength |
| comparative example | 22 | 1.35 | 27 | none | 1.60 | 55 | secured | none | 52 | 26 | 720 | 0.55 | 89 | 10,400 | unsatisfactory property | insufficient fatigue strength |
| comparative example | 23 | 1.64 | 30 | none | 1.58 | 61 | secured | none | 52 | 3 | 960 | 1.91 | 111 | 50,600 | unsatisfactory property | pit large |
| comparative example | 24 | 1.70 | 31 | none | 1.70 | 60 | secured | none | 52 | 8 | 905 | 2.03 | 107 | 77,400 | unsatisfactory property | pit large |
| comparative example | 25 | 1.98 | 34 | none | 1.79 | 69 | secured | none | 52 | 7 | 922 | 1.76 | 158 | 21,600 | unsatisfactory property | pit large |
| comparative example | 26 | 1.86 | 33 | none | 2.05 | 56 | secured | none | 52 | 4 | 955 | 0.54 | 126 | 46,400 | unsatisfactory property | pit large |
| comparative example | 27 | 1.99 | 34 | none | 1.87 | 60 | secured | none | 52 | 9 | 905 | 0.42 | 153 | 13,800 | unsatisfactory property | pit large |
| comparative example | 28 | 1.88 | 33 | none | 1.92 | 55 | secured | none | 52 | 3 | 975 | 0.38 | 125 | 40,400 | unsatisfactory property | condition unacceptable |
| reference example | (SUP7) | 1.45 | 28 | none | 1.49 | 57 | secured | none | 52 | 23 | 761 | 0.17 | 140 | 25,000 | unsatisfactory property | unsatisfactory property |
| reference example | (SUP9) | 2.24 | 37 | presence | - | - | - | - | - | 16 | 831 | - | - | - | - | fracture at the time of drawing |
| reference example | (SUP12) | 2.00 | 35 | none | 1.59 | 62 | secured | none | 52 | 19 | 796 | 0.19 | 152 | 20,400 | unsatisfactory property | unsatisfactory property |

[Table 3]

Hereinafter, a result of evaluation shown in Table 2 will be described. It was apparent that the inventive steel 1-9 which satisfied a composition range specified by the present invention indicated excellent characteristics at all the tests.

In comparative examples 10-12, its value of C(%) + Mn (%) + Cr(%) exceeded the range specified by the present invention (also the quantity of Mn was excessive in the comparative example 10 and the quantity of Cr was excessive in the comparative example 11), so that (1) the hardness after rolling exceeded HRC35 and (2) fracture occurred at the time of drawing.

As for comparative examples 13-17, the comparative examples 13-15 were short in the value of C(%) + Mn(%) + Cr(%)to the range specified by the invention, and the comparative examples 15-17 were short in the value of Si (%)/3 + Cr(%)/2 + Mn(%) + 170B(%) (also, the comparative example 13 is short in the quantity of C, the comparative example 14 is short in the quantity of Cr, the comparative example 15 is short in the quantity of Mn and the comparative example 16 is short in the quantity of Si) and (4) hardness after quenching was lower than HRC52 and the strength and hardenability were insufficient.

The comparative examples 18 and 19 were excessive in the value of Si(%)/3 + Cr(%)/2 + Mn(%) + 170B (%) to the range specified by the present invention, so that (3) quench crack occurred at the time of quenching.

As for the comparative examples 20-22, the comparative example 20 exceeded the range specified by the present invention in the quantity of Al, the comparative example 21 was excessive in the quantity of O, the comparative example 22 was excessive in the quantity of P, S, Al and O and (5) the quantity of inclusions was 10 or more while (6) the fatigue strength was insufficient. Further, (7) the corrosion fatigue strength was insufficient also.

As for the comparative examples 23-29, the comparative example 23 exceeded the range specified by the present invention in the quantity of C , the comparative example 24 was excessive in the quantity of Si, the comparative example 25 was excessive in the quantity of Cr, the comparative example 26 was short in the quantity of Cu, the comparative example 27 was short in the quantity of Ni, the comparative example 28 was short in the value of Cu (%) + Ni (%), (8) the depth of corrosion pit is greater than 100 $\mu$m and (7) the corrosion fatigue strength was insufficient.

The high strength spring steel of the present invention has an excellent drawing workability as a rolled material and an excellent manufacturability so that no crack occurs in quenching. Further, it has a high strength of HRC52 or higher ($\tau_{max}$ = 1176 MPa or more) as strength of quenched/tempered material and excellent fatigue strength and corrosion fatigue strength. Further, it has required characteristics suitable for the high strength spring.

Next, a coil spring obtained by performing warm shot peening on a spring steel in the range specified by the invention described above, in which an excellent fatigue strength, corrosion fatigue strength, and permanent setting resistance are achieved, will be shown as an example. Although a cold forming method and a hot forming method are available as a spring forming method, a coil spring having such characteristics was obtained in both of the methods. Here, the example A is a cold formed spring and the example B is a hot formed spring. The temperature condition of the warm spot peening was set to 250°C. As a comparative example, a spring obtained by cold forming a conventional steel (SUP7) was used.

Table 4 shows compositions of high strength spring steel of the present invention used in the examples A, B and the conventional steel (SUP7) used in the comparative example.

[Table 4]

| material | C | Si | Mn | P | S | Cu | Ni | Cr | Ti | Nb | B | Al | N | O | C+Mn+Cr | Si/3+Cr/2+Mn+170B | Cu+Ni |
|---|---|---|---|---|---|---|---|---|---|---|---|---|---|---|---|---|---|
| example A | 0.39 | 2.19 | 0.85 | 0.008 | 0.001 | 0.28 | 0.16 | 0.13 | - | - | - | 0.014 | 0.009 | 0.0011 | 1.37 | 1.65 | 0.44 |
| example B | 0.44 | 2.50 | 0.98 | 0.011 | 0.002 | 0.28 | 0.78 | 0.58 | 0.037 | 0,036 | 0.0016 | 0.021 | 0.007 | 0.0011 | 2.00 | 2.38 | 1.06 |
| comparative example (SUP7) | ↑0.60 | 2.00 | 0.93 | 0.012 | 0.008 | ↓0.01 | ↓- | 0.15 | - | - | - | 0.015 | 0.009 | 0.0009 | 1.68 | 1.67 | 0.01 or less |

Two alternative methods, namely, cold forming and hot forming methods, were used as spring forming methods according to the claimed method and the examples A and B were thereby produced respectively. The comparative example (SUP7) was cold formed. Specific processes are indicated below. In the meantime, the temperature condition of warm shot peening was set to 250°C.

\* Method by cold forming (example A and comparative example)

heating for quenching - quenching - tempering - cold coiling - stress relief annealing - warm shot peening - setting

\* Method by hot forming (example B)

heating for quenching - hot coiling - quenching - tempering - warm shot peening -setting

The shape of a spring obtained consequently will be described below.

\* Shape of cold formed spring

diameter: $\phi$10.8, coil average diameter: $\phi$108.3, free height: 380.5mm, effective number of turns: 4.69, spring constant: 22.4N/mm

\* Shape of hot formed spring

diameter: $\phi$12.5, coil average diameter: $\phi$110.0, free height: 382.0mm, effective number of turns: 5.41, spring constant: 33.3N/mm

The spring hardness was set to 52HRC and 54HRC. This is due to a following reason. The hardness of the spring varies in a certain range due to components and inevitable changes in tempering temperature. Thus, according to the present invention, experiments were performed in a range from 52HRC to 54HRC as upper and lower limits. Here, the fatigue strength and permanent setting property not relating to corrosion are higher as the hardness of the spring increases. On the other hand, the corrosion fatigue strength is lower as the hardness of the spring increases. Therefore, in order to achieve sufficient fatigue strength, permanent setting property and corrosion fatigue strength under a design stress of 1176MPa, the fatigue strength and permanent setting property need to be satisfied even if the hardness is lower and the corrosion fatigue strength needs to be improved even if the hardness is higher. Then, with the hardness of the spring of the present invention set to 52HRC, the fatigue strength and permanent setting property were compared with that of the conventional steel SUP7 having hardness of 49HRC and 54HRC. Further, the corrosion fatigue strength was compared with the conventional steel SUP7 having hardness of 51HRC.

(9) Fatigue strength

The fatigue strength was evaluated on the basis of the number of repetitions until the spring described in the above was broken when it was vibrated at each stress amplitude while an average stress was $\tau_m$ = 735MPa. Table 5 shows a result of the test.

[Table 5]

fatigue strength

☐ example A (51.8HRC(1870MPa))

◇ example B (52.0HRC(1890MPa))

△ comparative example SUP7 (54.2HRC(2020MPa))

—— logarithm (comparative example SUP7)

According to Table 5, in comparison of the fatigue strength of 49HRC and 54HRC in the comparative example SUP7, it is apparent that the fatigue life of 54HRC having a higher hardness is longer than the life of 49HRC at all stress amplitudes. Although the hardnesses of the example A and example B are HRC52 and lower than HRC54 of the comparative example SUP7, the examples A, B have long lives than 54HRC of the comparison SUP7 at all stress amplitudes. Further, it is apparent that the examples A, B indicate a fatigue strength of more than 200, 000 times under a condition in which the maximum shearing stress is 1176MPa (average stress 735MPa + stress amplitude 441MPa) thereby indicating that they are springs which achieve reduction of the weight. Further, in comparison between the examples, the example B having more additive element indicates a longer life than the example A.

(10) Permanent setting property

Evaluation of the permanent setting property was carried out by tightening test.

The tightening test is carried out in a following procedure. (a) A load P1 is applied to the coil spring with a load testing machine so as to generate a predetermined shearing stress, for example, 1176MPa so that the spring is allowed to deflect up to a corresponding height H. With this condition, the height of the spring is constrained with a jig. (b) The spring is heated at a predetermined temperature in a predetermined interval of time , at 80°C for 96 hours in this test, so as to generate creep deformation in the spring. (c) After the creep deformation is generated, the spring is released from the jig after the test time elapses and the spring is allowed to deflect up to the height H and then, a load P2 at that time is read. (d) A residual shearing distortion y is calculated according to a following equation (1) with a difference $\Delta P$ between an initial applied load and a load after the test ends. Where D is a coil average diameter, d is wire diameter and G is shear modules.

$$\gamma = 8D/\pi Gd3 \times (P1-P2) \ldots \text{Equation (1)}$$

This residual shearing distortion y indicates permanent setting property of the spring.

Table 6 shows a comparison of the permanent setting property in the tightening test between the examples and the comparative examples.

[Table 6]

example A (51.8HRC(1870MPa))
example B (52.0HRC(1890MPa))
comparative example SUP7 (54.2HRC(2020MPa))
comparative example SUP7

According to Table 6, the example A having hardness of 52HRC indicates an far more better permanent setting property than the comparative example (SUP7) having lower hardness of 49 HRC. Further, it indicates a substantially equal permanent setting property under all tightening stresses as compared with the SUP7 having hardness of 54HRC, that is higher than the example A. Further, the example B having hardness of 52HRC indicates an excellent permanent setting property as compared to the SUP7 of the 54HRC having higher hardness.

(11) Corrosion fatigue strength

The corrosion fatigue test was carried out in a following procedure. (a) Salt water of 5% NaCl at 35°C is sprayed to a coil spring for use in a test for 0.5 hours. (b) The spring is vibrated 3,000 times at a predetermined test stress, for example, with 735±490MPa at a room temperature in a wet condition, for 30 minutes. (c) After the vibration, the spring is left in a constant temperature and constant humidity bath under wet atmosphere of 95% at 26°C for 23 hours. This procedure is repeated until the spring is broken. Table 7 shows results of the test.

[Table 7]

example B
54HRC
735±490MPa

example A
54HRC
735±490MPa

comparative example SUP7
51HRC
735±395MPa

0    10000    20000    30000    40000    50000    60000    70000    80000

number of repetitions for breaking, N

According to Table 7, the comparative example SUP7 has hardness of 51HRC and the vibration condition is 735±395MPa. The number of repetitions of endurance is 59,000 times. Contrary to this, in case of the example A, the number of repetitions of endurance is equal or higher than the comparative example, that is, 60,000 times although its hardness is 54HRC and test stress is 735±490MPa. Further, the example B indicated an excellent corrosion fatigue strength as the number of repetitions of endurance is 74, 000 times under the condition in which the hardness is 54HRC and the test condition is 735±490MPa.

## Claims

1.   A manufacturing method of a high strength spring, wherein a high strength spring steel containing in percent of mass: C: 0.36-0.48 %; Si: 1.80-2.80 %; Mn: 0.20-1.40 %; P: 0.015 % or less; S: 0.010 % or less; Cu: 0.10-0.50 %; Ni: 0.10-2.00 %; Cr: 0.05-1.20 %; Ti: 0.020-0.070 %; s-Al: 0.005-0.04 %; N: 0.002-0.012%; O: 0.002 % or less, and optionally further containing one or two of Nb: 0.020-0.050 % and B: 0.0005-0.0030 %, and optionally further containing one or two of Mo: 0.01-0.50 % and V: 0.05-0.30 %, while the remainder is constituted of Fe and inevitable impurities, wherein following equations (1), (2), (3) are satisfied when no B is contained and the following equations (1), (2)', (3) are satisfied when B is contained and the quantity of inclusions of 10 μm or larger in diameter per field of vision of 100 mm$^2$ is 10 or less, which is formed into a spring shape by hot forming or cold forming:

$$1.2 \% \leq C (\%) + Mn (\%) + Cr (\%) \leq 2.0 \% \qquad \text{equation (1)}$$

$$1.4 \% \leq Si (\%)/3 + Cr (\%)/2 + Mn (\%) \leq 2.4 \% \qquad \text{equation (2)}$$

$$1.4 \% \leq Si (\%)/3 + Cr (\%)/2 + Mn (\%) + 170 B (\%) \leq 2.4 \% \quad \text{equation (2')}$$

$$0.4 \% \leq Cu (\%) + Ni (\%) \qquad \text{equation (3)}$$

characterized in that the method by cold forming comprises the steps of: heating for quenching, quenching, tempering to HRC52 or higher, cold coiling, stress relief annealing, warm shot peening, setting in this order, and the method by hot forming comprises the steps of: heating for quenching, hot coiling, quenching, tempering to HRC52 or higher, warm shot peening, setting in this order, wherein the warm shot peening is executed in a temperature range of 200-350°C.

**2.** A high strength spring being produced by the manufacturing method according to claim 1, wherein the hardness is tempered to HRC52 or higher and the maximum shearing stress is 1176 MPa or higher.

**Patentansprüche**

**1.** Verfahren zum Herstellen einer Hochfestigkeitsfeder, wobei ein Hochfestigkeitsfederstahl in Massenprozent umfasst: C: 0,36-0,48 %; Si: 1,80-2,80 %; Mn: 0,20-1,40 %; P: 0,015 % oder weniger; S: 0,010 % oder weniger; Cu: 0,10-0,50 %; Ni: 0,10-2,00 %; Cr: 0,05-1,20 %; Ti: 0,020-0,070 %; s-Al: 0,005-0,04 %; N: 0,002-0,012 %; O: 0,002 % oder weniger, und optional ferner eines oder beide von Nb: 0,020-0,050 % und B: 0,0005-0,0030 % umfasst, und optional ferner eines oder beide von Mo: 0,01-0,50 % und V: 0,05-0,30 % umfasst, während der Rest durch Fe und unvermeidbare Verunreinigungen dargestellt ist, wobei folgende Gleichungen (1), (2), (3) erfüllt sind, wenn kein B enthalten ist, und wobei die folgenden Gleichungen (1), (2'), (3) erfüllt sind, wenn B enthalten ist, und wobei die Anzahl von Einschlüssen mit einem Durchmesser von 10 µm oder mehr auf ein Sichtfeld von 100 mm$^2$ 10 oder weniger beträgt, welcher in eine Federform durch Warmformen oder Kaltformen geformt wird:

$$1,2 \text{ \%} \leq C(\%)+Mn(\%)+Cr(\%) \leq 2,0 \text{ \%} \qquad \text{Gleichung (1)}$$

$$1,4 \text{ \%} \leq Si(\%)/3+Cr(\%)/2+Mn(\%) \leq 2,4 \text{ \%} \qquad \text{Gleichung (2)}$$

$$1,4 \text{ \%} \leq Si(\%)/3+Cr(\%)/2+Mn(\%)+170B(\%) \leq 2,4 \text{ \%} \qquad \text{Gleichung (2')}$$

$$0,4 \text{ \%} \leq Cu(\%)+Ni(\%) \qquad \text{Gleichung (3)}$$

**dadurch gekennzeichnet, dass** das Verfahren durch Kaltformen die Schritte: Heizen zum Quenchen, Quenchen, Tempern auf HRC52 oder höher, kaltes Aufspulen, Spannungsarmglühen, warmes Kugelstrahlen, Setzen in dieser Reihenfolge umfasst, und wobei das Verfahren durch Warmformen die Schritte: Heizen zum Quenchen, heißes Aufspulen, Quenchen, Tempern auf HRC52 oder höher, warmes Kugelstrahlen, Setzen in dieser Reihenfolge umfasst, wobei das warme Kugelstrahlen in einem Temperaturbereich von 200-350 °C ausgeführt wird.

**2.** Hochfestigkeitsfeder, welche durch das Herstellungsverfahren nach Anspruch 1 hergestellt ist, wobei die Härte auf HRC52 oder höher getempert ist und die maximale Scherspannung 1176 MPa oder mehr beträgt.

**Revendications**

**1.** Procédé de fabrication d'un ressort à forte résistance, dans lequel un acier à ressort à forte résistance contenant en pour cent en masse: C: 0,36-0,48 %; Si: 1,80-2,80 %; Mn: 0,20-1,40 %; P: 0,015 % ou moins; S: 0,010 % ou moins; Cu: 0,10-0,50 %; Ni: 0,10-2,00 %; Cr: 0,05-1,20 %; Ti: 0,020-0,070 %; s-Al: 0,005-0,04 %; N: 0,002-0,012 %; O: 0,002 % ou moins et contenant en option un des deux ou les deux parmi Nb: 0,020-0,050 % et B: 0,0005-0,0030 % et contenant en outre en option un des deux ou les deux parmi Mo: 0,01-0,50 % et V: 0,05-0,30 %, le reste étant constitué de Fe et des impuretés inévitables, les équations suivantes (1), (2), (3) étant satisfaites lorsqu'il n'y a pas de B contenu et les équations suivantes (1), (2'), (3) étant satisfaites lorsque B est contenu et la quantité d'inclusions d'un diamètre de 10 µm ou plus par champ de vision de 100 mm$^2$ étant de 10 ou moins, lequel est formé en forme de ressort par formage à chaud ou formage à froid:

$$1,2 \text{ \%} \leq C \, (\%) + Mn \, (\%) + Cr \, (\%) \leq 2,0 \text{ \%} \quad \text{équation (1)}$$

$$1,4\ \% \leq;\ Si\ (\%)/3 + Cr\ (\%)/2 + Mn\ (\%) \leq 2,4\ \%\ \text{équation (2)}$$

$$1,4\ \% \leq Si\ (\%)/3 + Cr\ (\%)/2 + Mn\ (\%) + 170\ B\ (\%) \leq 2,4\ \%\ \text{équation (2')}$$

$$0,4\ \% \leq Cu\ (\%) + Ni\ (\%)\ \text{équation (3)}$$

**caractérisé en ce que** le procédé par formage à froid comprend les étapes de: chauffage pour trempe, trempe, recuit à HRC52 ou supérieure, bobinage à froid, recuit de détente, grenaillage d'écrouissage à chaud, détente, dans cet ordre, et
le procédé par formage à chaud comprend les étapes de: chauffage pour trempe, bobinage à chaud, trempe, recuit à HRC52 ou supérieure, grenaillage d'écrouissage à chaud, détente, dans cet ordre,
le grenaillage d'écrouissage à chaud étant exécuté à une plage de température de 200-350°C.

2. Ressort à forte résistance produit par le procédé de fabrication suivant la revendication 1,
dans lequel la dureté est recuite à HRC52 ou supérieure et la contrainte maximale de cisaillement est de 1176 MPa ou supérieure.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004012277 W
- JP 2003253391 A

- JP 3064672 B